# EUROPEAN PATENT APPLICATION

(11) **EP 4 582 474 A1**
(43) Date of publication of application: **09.07.2025**
(21) Application number: 23860416.9
(22) Date of filing: 30.08.2023
(51) Int. Cl.: C08K 9/00, C08L 101/00, H01B 1/24, C01B 32/21, H01M 8/0213, H01M 8/0221, H01M 8/0226, B29C 43/18, C09C 1/44, C09C 3/06, C08K 3/04

(54) **COMPOSITE CONDUCTIVE FILLER PARTICLES, CONDUCTIVE RESIN COMPOSITION, AND CONDUCTIVE RESIN MOLDED ARTICLE**

(30) Priority: 30.08.2022 JP 2022137337
(71) Applicant: MITSUBISHI PENCIL COMPANY, LIMITED, Tokyo 140-8537 (JP)
(72) Inventor: KUBO, Ryota, Fujioka-shi, Gunma 375-8501 (JP); YAMADA, Kunitaka, Fujioka-shi, Gunma 375-8501 (JP); NONOGAKI, Akihiro, Fujioka-shi, Gunma 375-8501 (JP)
(74) Representative: Vossius & Partner Patentanwälte Rechtsanwälte mbB
(86) International application number: PCT/JP2023/031543
(87) International publication number: WO 2024/048654

(57) **Abstract**

Provided are: composite conductive filler particles 10 having graphite particles 2 and amorphous carbon 1 with which the graphite particles are coated; a conductive resin composition 20 having a resin material 3 and the composite conductive filler particles 10 dispersed in the resin material 3; and a conductive resin composition molded article formed by molding the conductive resin composition 20.

## Description

### FIELD

The present invention relates to a composite conductive filler particle, a conductive resin composite, and a conductive resin composite molding.

### BACKGROUND

A conductive resin composite has been required in various fields; and such a resin composite is generally acquired by causing a resin material to contain a conductive filler, such as a carbon particle, a carbon fiber, a metallic particle, and a conductive metal oxide particle.

In this regard, for example, PTL 1 proposes manufacture of a circuit substrate by using a conductive resin composite, PTL 2 proposes manufacture of a resin collector for a lithium-ion battery by using a conductive resin composite, and PTL 3 proposes manufacture of an electromagnetic wave shield by using a conductive resin composite. PTL 4 discloses a separator for a fuel cell characterized by including a conductive gas blocking layer (B) on a conductive layer (A) acquired by binding and solidifying a conductive fiber by a synthetic resin.

### [CITATION LIST]

### [PATENT LITERATURE]

[PTL 1] Japanese Unexamined Patent Publication (Kokai) No. 2022-102442
[PTL 2] Japanese Unexamined Patent Publication (Kokai) No. 2022-085826
[PTL 3] Japanese Unexamined Patent Publication (Kokai) No. 2021-161193
[PTL 4] Japanese Unexamined Patent Publication (Kokai) No. 2001-015131

### SUMMARY

### [TECHNICAL PROBLEM]

When a conductive resin composite is obtained by adding carbon particles as a conductive filler to a resin material, it is preferable that graphite particles being high-conductivity carbon particles be added in large quantity to the resin material as a conductive filler in order to impart high conductivity to the conductive resin composite.

However, the present inventors have found an issue in that, in a conductive resin composite in which graphite particles are added to a resin material as a conductive filler, there is a quality trade-off due to peeling at an interface between the resin material and the graphite particles, and/or cleavage of the graphite particle itself, such as reduction in the strength of the conductive resin composite and/or permeation of gas.

The present invention provides a conductive resin composite with high conductivity and with high strength and/or excellent gas impermeableness, a conductive filler for such a conductive resin composite, and a conductive resin composite molding made of such a conductive resin composite.

### [SOLUTION TO PROBLEM]

As a result of intensive studies, the present inventors have found that the following means can resolve the aforementioned issue and have completed the present invention. More specifically, the present invention is as follows.

### <Aspect 1>

A composite conductive filler particle including a graphite particle and amorphous carbon covering the graphite particle.

### <Aspect 2>

The composite conductive filler particle according to the aspect 1, in which the volume average diameter is 5 µm to 1,000 µm.

### <Aspect 3>

The composite conductive filler particle according to the aspect 1, in which the ratio of the graphite particle to the total of the amorphous carbon and the graphite particle is 10% by mass to 95% by mass.

### <Aspect 4>

The composite conductive filler particle according to the aspect 1, in which the volume average diameter of the graphite particle is 1 µm to 500 µm.

### <Aspect 5>

A conductive resin composite including a resin material and the composite conductive filler particle according to the aspect 1 dispersed in the resin material.

### <Aspect 6>

The conductive resin composite according to the aspect 5, in which the ratio of the composite conductive filler particle to the total of the resin material and the composite conductive filler particle is 5% by mass to 95% by mass.

### <Aspect 7>

A conductive resin composite molding including the molded conductive resin composite according to the aspect 5.

### <Aspect 8>

The conductive resin composite molding according to the aspect 6, having a sheet shape.

### <Aspect 9>

The conductive resin composite molding according to the aspect 7, being a separator for a fuel cell.

### <Aspect 10>

A method for manufacturing the conductive resin composite molding according to the aspect 7, the method including providing a mixture including one or more thermoplastic resin fibers and the composite conductive filler particle according to the aspect 1 dispersed between the resin fibers and molding the mixture by heating and pressurization of the mixture.

### <Aspect 11>

The method according to the aspect 10, in which the mixture includes a fiber molding including the resin fiber and the composite conductive filler particle dispersed between the resin fibers in the fiber molding, and the method includes molding the mixture by heating and pressurization of the mixture.

### [ADVANTAGEOUS EFFECTS OF INVENTION]

The present invention provides a conductive resin composite with high conductivity and high strength, a conductive filler for such a conductive resin composite, and a conductive resin composite molding made of such a conductive resin composite.

### BRIEF DESCRIPTION OF DRAWINGS

FIG. 1 is a conceptual cross-sectional view illustrating a composite conductive filler particle according to the present invention [FIG. 1(a)] and a conductive resin composite according to the present invention [FIG. 1(b)] containing the composite conductive filler particle according to the present invention.

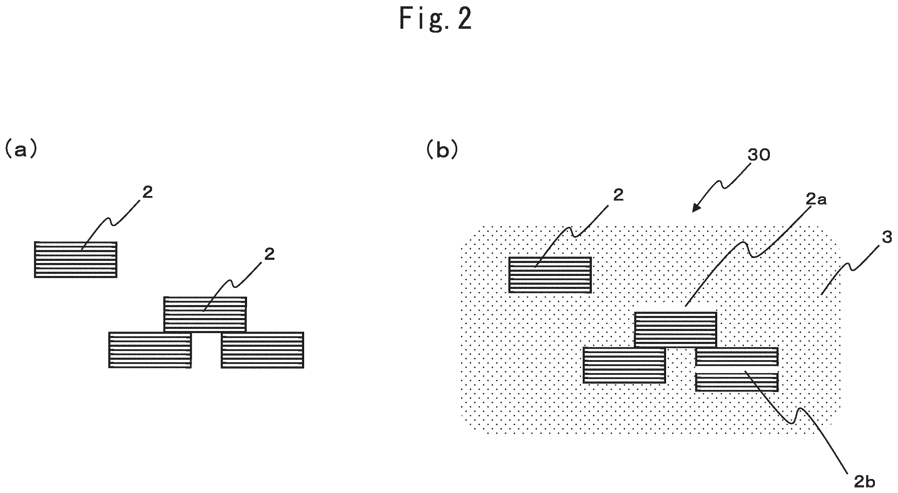

FIG. 2 is a conceptual cross-sectional view illustrating a conventional graphite filler particle [FIG. 2(a)] and a conventional conductive resin composite [FIG. 2(b)] containing the conventional graphite filler particle.

### DESCRIPTION OF EMBODIMENTS

### <<Composite Conductive Filler Particle>>

A composite conductive filler particle according to the present invention includes a graphite particle and amorphous carbon covering the graphite particle.

As described above, it is preferable to add graphite particles to a resin material in large quantity in order to impart high conductivity to a conductive resin composite. However, as described above, there is an issue in a conductive resin composite in which graphite particles are added to a resin material in that there is a quality trade-off due to peeling at an interface between the resin material and the graphite particle and/or cleavage of the graphite particle itself, such as reduction in the strength of the conductive resin composite and/or permeation of gas.

On the other hand, by covering a graphite particle by amorphous carbon, the composite conductive filler particle according to the present invention enables utilization of high conductivity of the graphite particle while suppressing the issue caused by peeling at an interface between a resin material and the graphite particle and/or cleavage of the graphite particle itself.

Existence of amorphous carbon on the surface of a conductive filler according to the present disclosure can be confirmed by the integrated intensity ratio of the D-band (1100 to 1450 cm⁻¹) to the G-band (1450 to 1700 cm⁻¹) acquired from a Raman spectrum of the conductive filler being equal to or greater than 0.5 and particularly being equal to or greater than 0.5 and equal to or less than 1.1. It should be noted that the ratio is less than 0.5 solely with graphite and greater than 1.1 solely with amorphous carbon. Accordingly, the ratio being equal to or greater than 0.5 and equal to or less than 1.1 is considered to be resulting from a spectrum derived from a bond of graphite origin together with a spectrum derived from a bond of amorphous carbon origin being acquired due to thinness of an amorphous carbon layer on the surface or existence of a gap in the amorphous carbon layer on the surface.

It should also be noted that while the graphite particle contained in the composite conductive filler particle according to the present invention may be a graphite particle in any shape, such as a scaly shape, a spherical shape, a massive shape, or a flaky shape, a scaly or spherical graphite particle is preferably used from the viewpoint of conductivity.

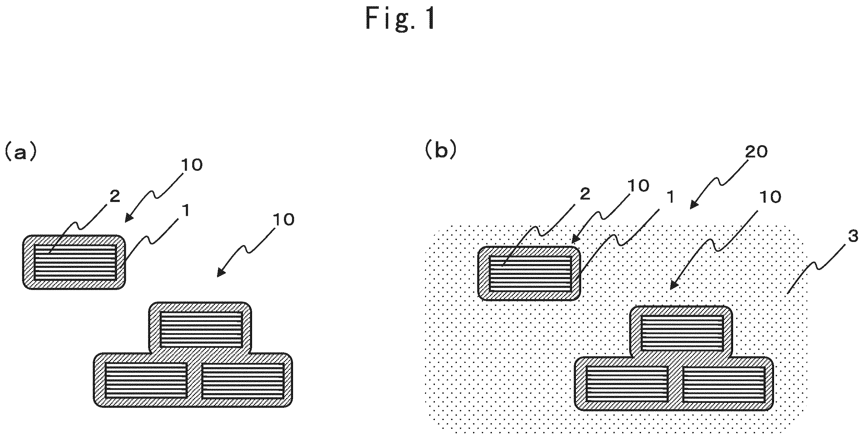

For example, such a composite conductive filler particle according to the present invention may be a particle as illustrated in FIG. 1(a). In other words, a composite conductive filler particle 10 according to the present invention includes a graphite particle 2 and amorphous carbon 1 covering the graphite particle 2, as illustrated in FIG. 1(a). By adding such a composite conductive filler particle 10 according to the present invention to a resin material 3, a conductive resin composite 20 can be acquired, as illustrated in FIG. 1(b).

On the other hand, a graphite particle conventionally used as a filler is a simple graphite particle 2 as illustrated in FIG. 1(b), and a conventional conductive resin composite 30 is acquired by adding such a simple graphite particle 2 to a resin material 3. As described above, an issue caused by a peeling part 2a at an interface between the resin material 3 and the graphite particle 2 and/or a cleavage part 2b of the graphite particle 2 itself may occur in such a conventional conductive resin composite 30. An issue that the conductive resin composite tends to rupture with the peeling part 2a and/or the cleavage part 2b as a trigger may occur in such a conventional conductive resin composite 30.

The composite conductive filler particle according to the present invention may have a volume average diameter of 5 µm to 1,000 µm. The volume average diameter may be equal to or greater than 5 µm, equal to or greater than 10 µm, equal to or greater than 20 µm, equal to or greater than 30 µm, equal to or greater than 40 µm, or equal to or greater than 50 µm and may be equal to or less than 1,000 µm, equal to or less than 900 µm, equal to or less than 800 µm, equal to or less than 700 µm, equal to or less than 600 µm, equal to or less than 500 µm, equal to or less than 400 µm, equal to or less than 300 µm, equal to or less than 250 µm, equal to or less than 200 µm, equal to or less than 150 µm, or equal to or less than 100 µm.

Regarding the present invention, a "volume average diameter" (Mv) can be acquired as a result of dividing, by the average volume, a weighted average value acquired by using a product of the frequency of occurrence of each particle diameter and the volume calculated by using the particle diameter by using a laser diffraction type particle size distribution measuring device (e.g., MT-3000 manufactured by MicrotracBEL Corporation).

The ratio of the graphite particles to the total of the amorphous carbon and the graphite particles may be 10% by mass to 95% by mass in the composite conductive filler particle according to the present invention. A smaller ratio is preferable for suppressing the issue of peeling at an interface of the resin material and the graphite particle and/or cleavage of the graphite particle itself by covering the graphite particle by the amorphous carbon. On the other hand, a larger ratio is preferable for utilizing satisfactory conductivity of the graphite particle. The ratio may be equal to or greater than 10% by mass, equal to or greater than 20% by mass, equal to or greater than 30% by mass, equal to or greater than 40% by mass, equal to or greater than 50% by mass, equal to or greater than 60% by mass, or equal to or greater than 70% by mass and may be equal to or less than 95% by mass, equal to or less than 90% by mass, equal to or less than 85% by mass, or equal to or less than 80% by mass.

Regarding the present invention, "the ratio of the graphite particles to the total of the amorphous carbon and the graphite particles" can be found with the residual factor (yield) of the graphite particles being used as 100% by mass, based on the weight ratios of various raw materials of the composite conductive filler particle according to the present invention in a manufacturing stage and the residual factor after burning.

The volume average diameter of graphite particles dispersed in amorphous carbon in the composite conductive filler particle according to the present invention may be 1 µm to 500 µm. The volume average diameter of graphite particles may be equal to or greater than 1 µm, equal to or greater than 2 µm, equal to or greater than 3 µm, equal to or greater than 4 µm, equal to or greater than 5 µm, equal to or greater than 7 µm, equal to or greater than 10 µm, equal to or greater than 15 µm, equal to or greater than 25 µm, or equal to or greater than 30 µm and may be equal to or less than 500 µm, equal to or less than 400 µm, equal to or less than 370 µm, equal to or less than 350 µm, equal to or less than 300 µm, equal to or less than 250 µm, equal to or less than 200 µm, equal to or less than 150 µm, equal to or less than 100 µm, equal to or less than 90 µm, equal to or less than 80 µm, equal to or less than 70 µm, equal to or less than 60 µm, equal to or less than 50 µm, equal to or less than 40 µm, or equal to or less than 30 µm.

The composite conductive filler particle according to the present invention can be manufactured by any method. For example, the composite conductive filler particle according to the present invention can be acquired by acquiring a graphite-particle-containing resin block in which graphite particles are dispersed in a resin material by dispersing the graphite particles in the resin material, optionally curing and/or infusibilizing the graphite-particle-containing resin block, then amorphous carbonating the resin material by burning the block in an inert atmosphere, thereby acquiring a graphite-particle-containing amorphous carbon block, and pulverizing and optionally sizing the graphite-particle-containing amorphous carbon block. It should be noted that, as for the method for dispersing graphite particles in a resin material, the following description about a method for manufacturing a conductive resin composite may be referenced.

It should also be noted that any thermoplastic resin or curable resin which is amorphous carbonated when being burned in an inert atmosphere may be used as a resin being used to be amorphous carbonated. Examples of a thermoplastic resin include a thermoplastic polyimide resin (TPI), a chlorinated vinyl chloride resin (CPVC), a polyvinyl chloride resin (PVC), a polyetherimide resin (PEI), and a polyacrylonitrile resin (PAN) but are not limited thereto. Examples of a heat-curable resin include a polyimide resin, a furan resin, and a phenolic resin but are not limited thereto.

### <<Conductive Resin Composite>>

The conductive resin composite according to the present invention includes a resin material and composite conductive filler particles according to the present invention dispersed in the resin material.

As described above, such a conductive resin composite enables utilization of high conductivity of a graphite particle while suppressing the issue caused by peeling at an interface between the resin material and the graphite particle and/or cleavage of the graphite particle itself.

The ratio of the composite conductive filler particles to the total of the resin material and the composite conductive filler particles may be 5% by mass to 95% by mass. The ratio may be equal to or greater than 5% by mass, equal to or greater than 10% by mass, equal to or greater than 20% by mass, equal to or greater than 30% by mass, equal to or greater than 40% by mass, equal to or greater than 50% by mass, equal to or greater than 60% by mass, or equal to or greater than 70% by mass and may be equal to or less than 95% by mass, equal to or less than 90% by mass, equal to or less than 80% by mass, equal to or less than 70% by mass, equal to or less than 60% by mass, equal to or less than 50% by mass, equal to or less than 40% by mass, equal to or less than 30% by mass, equal to or less than 20% by mass, or equal to or less than 10% by mass.

The conductive resin composite according to the present invention may contain any additive component other than the resin material and the composite conductive filler particle. Examples of such an additive component include glass-based materials such as a glass fiber; cellulose-based materials such as carboxymethylcellulose and a cellulose nanofiber; and carbon-based materials such as a carbon fiber, graphite, graphene, a carbon nanotube, carbon black, acetylene black, and ketjen black. Containing a carbon fiber as an additive component may be preferable for providing high conductivity to the conductive resin composite according to the present invention.

The conductive resin composite according to the present invention can be manufactured by any method and can be manufactured by any known method for acquiring a conductive resin composite in which conductive fillers are dispersed in a resin material. Accordingly, for example, the conductive resin composite according to the present invention can be manufactured by the following method:
(i) mixing a powdered or fibrous resin material with the composite conductive filler particle according to the present invention, and heating and optionally pressing the acquired mixture,
(ii) mixing a liquid curable resin with the composite conductive filler particle according to the present invention; and heating and optionally pressing the acquired mixture, or putting the mixture into a mold and curing the curable resin,
(iii) kneading a thermoplastic resin material melted or softened by heat, and the composite conductive filler particle according to the present invention, or
(iv) impregnating a fiber molding including a thermoplastic resin fiber, such as a sheet-shaped fiber molding such as a nonwoven fabric, with a dispersion solution containing the composite conductive filler particle according to the present invention, removing the dispersion medium, and then heating and optionally pressing the acquired fiber molding.

### <<Conductive Resin Composite Molding>>

The conductive resin composite molding according to the present invention includes a molded conductive resin composite according to the present invention. The conductive resin composite molding may have any shape according to the use and, for example, may have a sheet shape. The conductive resin composite molding may be a separator for a fuel cell. The conductive resin composite molding has high conductivity and high strength and therefore can be preferably used as a separator for a fuel cell.

The conductive resin composite molding according to the present invention can be manufactured by any method and can be manufactured by any known method for acquiring a conductive resin composite molding in which conductive fillers are dispersed in a resin material. Accordingly, for example, the conductive resin composite molding according to the present invention can be manufactured by the following methods:
(i) mixing a powdered or fibrous resin material with the composite conductive filler particle according to the present invention and molding the acquired mixture by heating and pressing the mixture,
(ii) mixing a liquid curable resin with the composite conductive filler particle according to the present invention; and molding the acquired mixture by heating and pressing the mixture or putting the mixture in a mold and molding the mixture by curing the curable resin,
(iii) molding the conductive resin composite according to the present invention by press molding, extrusion molding, roll molding, injection molding, or the like, or
(iv) impregnating a fiber molding including a thermoplastic resin fiber, such as a sheet-shaped fiber molding such as a nonwoven fabric, with a dispersion solution containing the composite conductive filler particle according to the present invention, removing the dispersion medium, and then molding the acquired fiber molding by heating and pressing the fiber molding.

Further, for example, the conductive resin composite molding according to the present invention can be manufactured by providing a mixture including a thermoplastic resin fiber and the composite conductive filler particles according to the present invention dispersed between the resin fibers and molding the mixture by heating and pressurization of the mixture. In the method, the mixture may particularly include a fiber molding including a resin fiber (e.g., a sheet-shaped fiber molding and particularly a nonwoven fabric or fiber paper) and the composite conductive filler particles according to the present invention dispersed between the resin fiber in the fiber molding, and the mixture can be molded by heating and pressurization of the mixture and can particularly be molded to a sheet shape.

### EXAMPLES

### <<Examples 1 to 13>>

### <Preparation of Composite Conductive Filler Particles A to I>

Materials with the following composition were mixed by a Henschel mixer, were put into a kneader, were warmed to 100°C, and were kneaded with a polyvinyl chloride resin being melted thereinto. The acquired mixture was pulverized by a bi-axial pulverizer after cooling and was subsequently infusibilized by heating at 180°C for 24 hours, and a graphite-containing resin block was acquired.
scaly graphite particle [volume average diameter (Mv): 5 µm]: 40% by mass
polyvinyl chloride resin: 40% by mass
lubricant: 1% by mass
plasticizer: 19% by mass

A graphite-containing amorphous carbon block was acquired by burning the graphite-containing resin block acquired as described above in an atmosphere of nitrogen at 1000°C and amorphous carbonating the polyvinyl chloride resin. A composite conductive filler particle A was acquired by pulverizing the graphite-containing amorphous carbon block by using an aluminous mortar and sizing the pulverized block by using a mesh. The volume average diameter (Mv) of the acquired composite conductive filler particle A was 200 µm.

It should be noted that the residual factor of the aforementioned graphite-containing amorphous carbon block at the time of burning was 53.33%, the residual factor of the scaly graphite particle was approximately 100% by mass, and the residual factor of each of the lubricant and the plasticizer was approximately 0% by mass, and therefore, based on the weight ratios of the raw materials, the ratio of the graphite particles to the total of the graphite particles and the amorphous carbon in the composite conductive filler particle A is considered to be approximately 75% by mass.

Composite conductive filler particles B to I were prepared similarly to the preparation of the composite conductive filler particle A except that the volume average diameter (Mv) of the acquired composite conductive filler particle was changed by adjusting the degree of pulverization and the mesh opening for sizing, scaly graphite with a different volume average diameter (Mv) was used as a raw material, and spherical graphite was used in place of scaly graphite as a raw material.

Details of the composite conductive filler particles A to I are summarized in Table 1 below.

### [Table 1]

**Table 1**

| | Raw material graphite particle | Ratio of graphite particle to total of graphite particle and amorphous carbon | Volume average diameter of composite conductivity filler particle (Mv) |
|---|---|---|---|
| Composite conductive filler particle A | Scaly graphite (Mv: 5 µm) | Approx. 75% by mass | 200 µm |
| Composite conductive filler particle B | Scaly graphite (Mv: 5 µm) | Approx. 75% by mass | 50 µm |
| Composite conductive filler particle C | Scaly graphite (Mv: 5 µm) | Approx. 75% by mass | 20 µm |
| Composite conductive filler particle D | Scaly graphite (Mv: 5 µm) | Approx. 75% by mass | 10 µm |
| Composite conductive filler particle E | Scaly graphite (Mv: 10 µm) | Approx. 75% by mass | 20 µm |
| Composite conductive filler particle F | Scaly graphite (Mv: 30 µm) | Approx. 75% by mass | 50 µm |
| Composite conductive filler particle G | Spherical graphite (Mv: 20 µm) | Approx. 75% by mass | 30 µm |
| Composite conductive filler particle H | Scaly graphite (Mv: 130 µm) | Approx. 75% by mass | 170 µm |
| Composite conductive filler particle I | Scaly graphite (Mv: 350 µm) | Approx. 75% by mass | 290 µm |

### <Preparation of Molded Sheet for Evaluation>

Conductivity resin sheets in Examples 1 to 15 were acquired by using the composite conductive filler particles A to I acquired as described above, a resin for molding, and a carbon fiber (except for Example 1). The ratios of the composite conductive filler particles A to I, the resin for molding, and the carbon fiber when used were set as follows.
·when a carbon fiber is not used
composite conductive filler particles A to I: 40% by mass
resin for molding: 60% by mass
· when a carbon fiber is used
composite conductive filler particles A to I: 40% by mass
resin for molding: 40% by mass
carbon fiber when used: 20 parts by mass

Specifically, when the resin for molding is polyetherimide, polyphenylene sulfide, or polyvinylidene fluoride, the composite conductive filler particle, the powdered resin for molding, and the carbon fiber as needed were mixed by a mixer and underwent press molding at a pressure of 10 MPa in a flat-plate-shaped mold warmed to 250 to 330°C; and a conductive sheet with a thickness of 200 to 300 µm was acquired.

When the resin for molding is a resol-type phenolic resin, the composite conductive filler particle, the liquid resin for molding, and the carbon fiber were mixed by a mixer and underwent press molding at a pressure of 10 MPa in a flat-plate-shaped mold warmed to 250 to 330°C; and a conductive sheet with a thickness of 200 to 300 µm was acquired.

When the resin for molding is nylon 6, the composite conductive filler particle was added to 0.5% by mass of a Demol N aqueous solution in such a way that the concentration is 8% by mass, ultrasonic dispersion was performed, and a filler particle dispersion solution diluted two-fold by ethanol was acquired. Subsequently, the filler particle dispersion solution with ten times the weight of a nylon 6 nonwoven fabric added with a carbon fiber was dropped on the nonwoven fabric, and the fabric was dried at 70°C and underwent press molding at a pressure of 10 MPa in a flat-plate-shaped mold warmed to 250°C; and a conductive sheet with a thickness of 200 to 300 µm was acquired.

### <Evaluation>

For an acquired conductive sheet, the contact resistance was measured as a conductivity evaluation, and the maximum point stress acquired by a three-point bending test at an inter-fulcrum distance of 15 mm was measured as a strength evaluation.

In Examples 11 and 12 and Comparative Example 8, the gas permeability was measured by a differential pressure method conforming to "JIS K7126-1: 2006." The pressure of testing gas was set to 100 kPa (on the high-pressure side), and nitrogen was used as the testing gas.

### <<Comparative Example 1>>

A conductive resin sheet in Comparative Example 1 was acquired similarly to Example 1 except that the composite conductive filler particle (containing a scaly graphite particle) was not used and then was evaluated.

### <<Comparative Example 2>>

A conductive resin sheet in Comparative Example 2 was acquired similarly to Example 2 except that uncomposited simple scaly graphite was used in place of the composite conductive filler particle (containing a scaly graphite particle) and then was evaluated. It should be noted that, in Comparative Example 2, the quantity of the simple scaly graphite was set to be equal to the quantity of the composite conductive filler particle in Example 2.

### <<Comparative Examples 3 and 4>>

Conductive resin sheets in Comparative Examples 3 and 4 were acquired similarly to Examples 3 to 6 except that an uncomposited simple scaly graphite was used in place of the composite conductive filler particle (containing a scaly graphite particle) and then were evaluated. It should be particularly noted that, in Comparative Examples 3 and 4, the quantity of the simple scaly graphite was set to be equal to the quantity of the composite conductive filler particle in Examples 3 to 6. The volume average diameter (Mv) of the simple scaly graphite used in Comparative Example 3 was 200 µm, and the volume average diameter (Mv) of the simple scaly graphite used in Comparative Example 4 was 30 µm.

### <<Comparative Example 5>>

A conductive resin sheet in Comparative Example 5 was acquired similarly to Examples 3 to 6 except that a mixture of a simple scaly graphite particle and an amorphous carbon particle was used in place of the composite conductive filler particle (containing a scaly graphite particle) and then was evaluated. It should be noted that, in Comparative Example 5, the quantity of the mixture of the simple scaly graphite particle and the amorphous carbon particle was set to be equal to the quantity of the composite conductive filler particle in Examples 3 to 6. The weight ratio between the simple scaly graphite particle and the amorphous carbon particle was 3:1. The volume average diameter (Mv) of the mixture of the simple scaly graphite particle and the amorphous carbon particle used in Comparative Example 5 was 30 µm for each component.

### <<Comparative Example 6>>

A conductive resin sheet in Comparative Example 6 was acquired similarly to Example 9 except that an uncomposited simple spherical graphite particle was used in place of the composite conductive filler particle (containing a spherical graphite particle) and then was evaluated. It should be noted that, in Comparative Example 6, the quantity of the simple spherical graphite particle was set to be equal to the quantity of the composite conductive filler particle in Example 9. The volume average diameter (Mv) of the simple spherical graphite particle used in Comparative Example 6 was 20 µm.

### <<Comparative Examples 7 to 11>>

Conductivity resin sheets in Comparative Examples 7 to 11 were respectively acquired similarly to Examples 10, 11, and 13 to 15 except that an uncomposited simple scaly graphite was used in place of the composite conductive filler particle (containing a scaly graphite particle) and then were evaluated. It should be particularly noted that, in Comparative Examples 7 to 11, the quantity of the simple scaly graphite was set to be equal to the quantity of the composite conductive filler particle in Examples 10 to 13. The volume average diameter (Mv) of the simple scaly graphite used in Comparative Examples 7 and 9 to 11 was 30 µm, and the volume average diameter (Mv) of the simple scaly graphite used in Comparative Example 8 was 350 µm.

Details and evaluation results of the conductive sheets in Examples and Comparative Examples are summarized in Table 2 to Table 9 below.

### [Table 2]

**Table 2**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 1 | Composite particle A (containing scaly graphite) | 200 | Polyetherimide | Not Exist | 88.1 | - |
| Comparative Example 1 | - | - | Polyetherimide | Not Exist | (Insulated) | - |

### [Table 3]·

**Table 3**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 2 | Composite particle A (containing scaly graphite) | 200 | Polyetherimide | Exist | 12.6 | 95.9 |
| Comparative Example 2 | Scaly graphite | 200 | Polyetherimide | Exist | 29.4 | 88.2 |

### [Table 4]

**Table 4**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 3 | Composite particle A (containing scaly graphite) | 200 | Nylon 6 | Exist | 10.0 | 85.2 |
| Example 4 | Composite particle B (containing scaly graphite) | 50 | Nylon 6 | Exist | 10.6 | 99.3 |
| Example 5 | Composite particle C (containing scaly graphite) | 20 | Nylon 6 | Exist | 13.2 | 116.5 |
| Example 6 | Composite particle D (containing scaly graphite) | 10 | Nylon 6 | Exist | 19.6 | 157.2 |
| Example 7 | Composite particle E (containing scaly graphite) | 20 | Nylon 6 | Exist | 12.4 | 125.9 |
| Example 8 | Composite particle F (containing scaly graphite) | 50 | Nylon 6 | Exist | 12.1 | 101.0 |
| Comparative Example 3 | Scaly graphite | 200 | Nylon 6 | Exist | 12.5 | 78.5 |
| Comparative Example 4 | Scaly graphite | 30 | Nylon 6 | Exist | 15.1 | 93.0 |
| Comparative Example 5 | Amorphous carbon + scaly graphite | 30 | Nylon 6 | Exist | 15.4 | 101.7 |

### [Table 5]

**Table 5**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 9 | Composite particle G (containing spherical graphite) | 30 | Nylon 6 | Exist | 9.8 | 81.4 |
| Comparative Example 6 | Spherical graphite | 20 | Nylon 6 | Exist | 11.8 | 73.6 |

### [Table 6]

**Table 6**

| | Components of resin composite | | | | Evaluation result | | |
|---|---|---|---|---|---|---|---|
| | Filler | | Resin for molding | Carbon fiber | Contact resistance [mΩ·cm2] | Maximum point stress [MPa] | Gas permeability [cm3sec-1cm-2] |
| | Type | Mv [µm] | | | | | |
| Example 10 | Composite particle D (containing scaly graphite) | 10 | Nylon 9T | Exist | 19.1 | 164.5 | - |
| Example 11 | Composite particle H (containing scaly graphite) | 170 | Nylon 9T | Exist | 11.1 | 133.2 | 4.8 × 10⁻⁸ |
| Example 12 | Composite particle I (containing scaly graphite) | 290 | Nylon 9T | Exist | 26.1 | 106.6 | 6.4× 10⁻⁷ |
| Comparative Example 7 | Scaly graphite | 30 | Nylon 9T | Exist | 26.5 | 103.8 | - |
| Comparative Example 8 | Scaly graphite | 350 | Nylon 9T | Exist | 26.5 | 103.8 | 4.4 × 10⁻⁵ |

### [Table 7]

**Table 7**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 13 | Composite particle D (containing scaly graphite) | 8 | Polyphenylene sulfide | Exist | 53.3 | 139.7 |
| Comparative Example 9 | Scaly graphite | 30 | Polyphenylene sulfide | Exist | 52.1 | 88.2 |

### [Table 8]

**Table 8**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 14 | Composite particle D (containing scaly graphite) | 8 | Polyvinylidene fluoride | Exist | 41.5 | 136.8 |
| Comparative Example 10 | Scaly graphite | 30 | Polyvinylidene fluoride | Exist | 40.6 | 86.4 |

### [Table 9]

**Table 9**

| | Components of resin composite | | | | Evaluation result | |
|---|---|---|---|---|---|---|
| | Filler | | Resin for molding | Carbon fiber | Contact resistance [mΩ·cm2] | Maximum point stress [MPa] |
| | Type | Mv [µm] | | | | |
| Example 15 | Composite particle D (containing scaly graphite) | 8 | Resol-type mold phenolic resin | Exist | 57.5 | 116.5 |
| Comparative Example 11 | Scaly graphite | 30 | Resol-type phenolic resin | Exist | 56.3 | 73.5 |

As illustrated in Table 2 to Table 9, when a conductive filler was added, reduction in the resistance value was observed relative to the case of not adding the conductive filler. Reduction in the strength was observed when a simple graphite particle was used as a conductive filler; while on the other hand, the performance was relatively satisfactory when the composite conductive filler particle according to the present invention was used.

Furthermore, as illustrated in Table 6, when the composite conductive filler particle according to the present invention was used as a conductive filler, gas permeability was lower, and gas impermeableness was more satisfactory compared with the case of using a simple graphite particle. While measurement of gas permeability was not performed in Examples 1 to 10 and 13 to 15, cleavage of a graphite particle will be suppressed, since a satisfactory strength was acquired as described above. Accordingly, satisfactory gas permeability will be acquired in these Examples as well.

### REFERENCE SIGNS LIST

1 Amorphous carbon
2 Graphite particle
2a Peeling part at interface between resin material and graphite particle
2b Cleavage part of graphite particle
3 Resin material
10 Composite conductive filler particle according to present invention
20 Conductive resin composite according to present invention
30 Conventional conductive resin composite

## Claims

1. A composite conductive filler particle including a graphite particle and amorphous carbon covering the graphite particle.

2. The composite conductive filler particle according to claim 1, in which the volume average diameter is 5 µm to 1,000 µm.

3. The composite conductive filler particle according to claim 1, in which the ratio of the graphite particle to the total of the amorphous carbon and the graphite particle is 10% by mass to 95% by mass.

4. The composite conductive filler particle according to claim 1, in which the volume average diameter of the graphite particle is 1 µm to 500 µm.

5. A conductive resin composite including a resin material and the composite conductive filler particle according to claim 1 dispersed in the resin material.

6. The conductive resin composite according to claim 5, in which the ratio of the composite conductive filler particle to the total of the resin material and the composite conductive filler particle is 5% by mass to 95% by mass.

7. A conductive resin composite molding including the molded conductive resin composite according to claim 5.

8. The conductive resin composite molding according to claim 6, having a sheet shape.

9. The conductive resin composite molding according to claim 7, being a separator for a fuel cell.

10. A method for manufacturing the conductive resin composite molding according to claim 7, the method including providing a mixture including one or more thermoplastic resin fibers and the composite conductive filler particle according to the claim 1 dispersed between the resin fibers and molding the mixture by heating and pressurization of the mixture.

11. The method according to claim 10, in which the mixture includes a fiber molding including the resin fiber and the composite conductive filler particle dispersed between the resin fibers in the fiber molding, and the method includes molding the mixture by heating and pressurization of the mixture.
